Europäisches Patentamt

European Patent Office

Office européen des brevets

(11) Publication number: **0 069 271**
**A2**

(12) # EUROPEAN PATENT APPLICATION

(21) Application number: 82105461.6

(51) Int. Cl.³: **B 29 F 3/01**

(22) Date of filing: 22.06.82

(30) Priority: 22.06.81 US 275721

(43) Date of publication of application:
12.01.83 Bulletin 83/2

(84) Designated Contracting States:
AT BE CH DE FR GB IT LI LU NL SE

(71) Applicant: GLOUCESTER ENGINEERING CO., INC.
Blackburn Industrial Park
Gloucester Massachusetts 01930(US)

(72) Inventor: Langecker, Gunter R.
26 Beethoven- Strasse
D-5882 Meinerzhagen(DE)

(74) Representative: Heidrich, Udo, Dr. jur., Dipl.-Phys.
Franziskanerstrasse 30
D-8000 München 80(DE)

(54) Extruder for plastic resin.

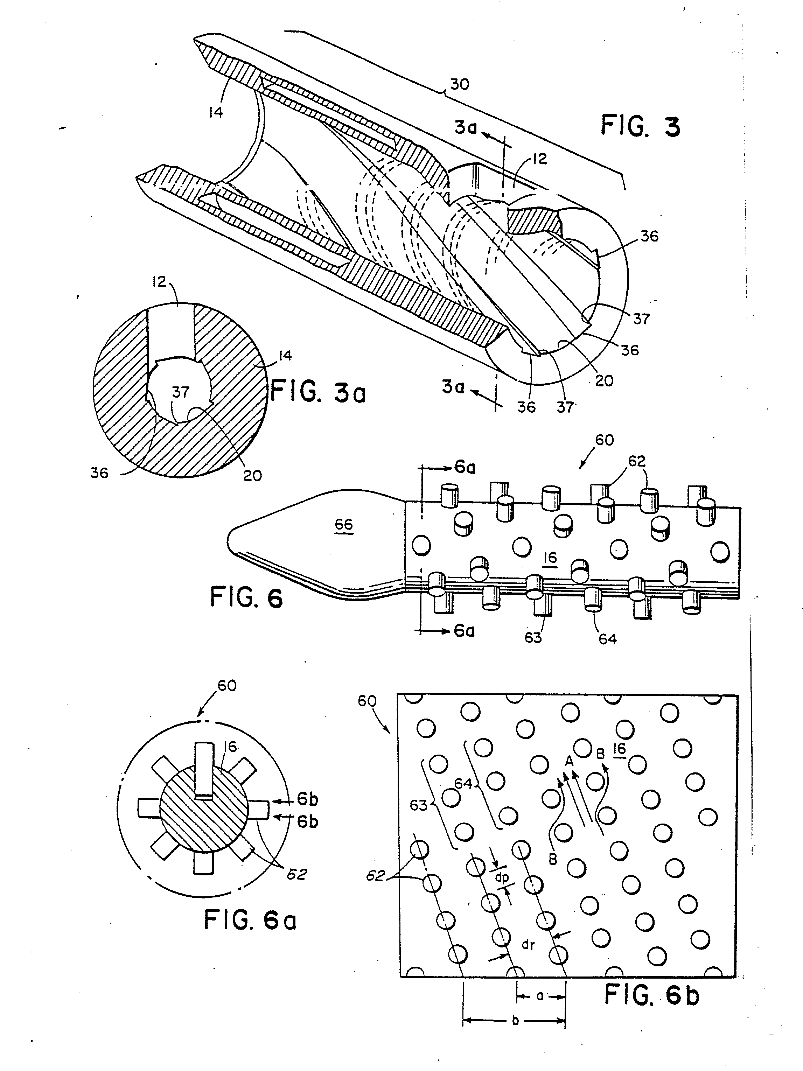

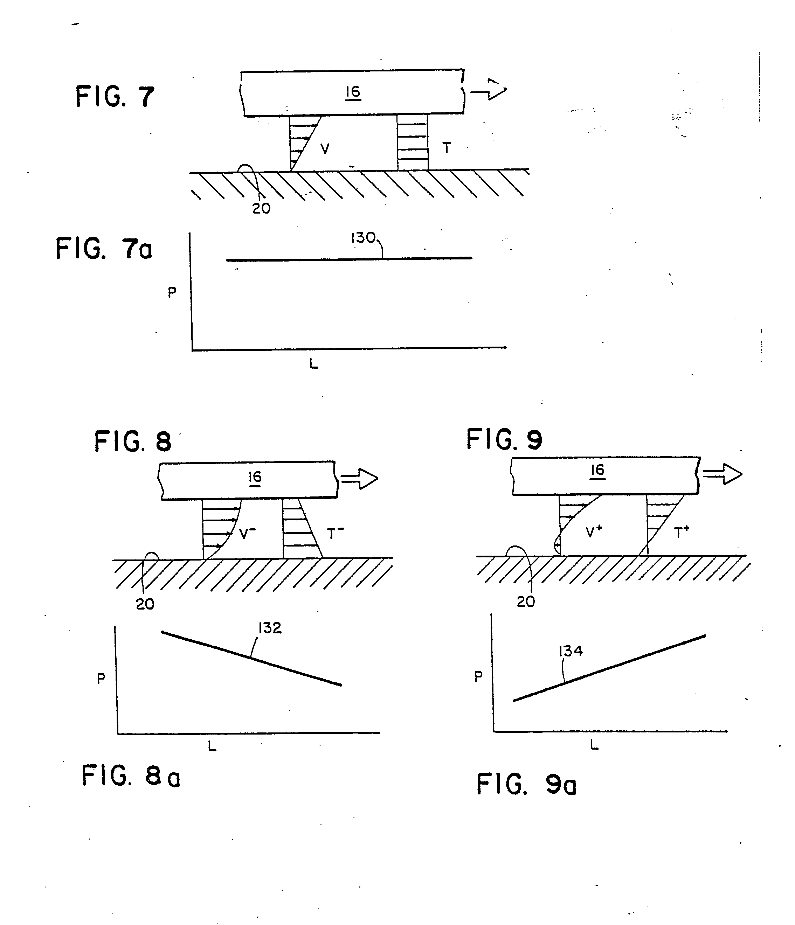

(57) Single shaft, barrier-type extruder having wide helical passages and adapted to produce plug flow in the solid resin and drag flow in the melted resin. The solid resin particles are compressed (at 30) to a pressure near the requirement of the die apparatus, by a grooved barrel (Figure 3), solids feed stage. The solids passage in the barrier region has width that corresponds to the width of the soiled passage from the pressurization stage (30), enabling effective transmission of conveying pressure through a relatively undisturbed, compact column of solids. The melt passage has similar width and increases in depth along t'ᴇ length of the barrier to approach drag flow conditions. Mixing of molten resin with a neutral pressure gradient is achieved with a special array of pins (62, Figure 6) that provide sufficient forwarding to overcome mixing losses. A homogeneous melt of uniform temperature and viscosity can thus be achieved at high flow rate despite large back pressure.

./...

EP 0 069 271 A2

## EXTRUDER FOR PLASTIC RESIN

### Field of the Invention

This invention concerns single shaft, plastic resin extruders capable of feeding die apparatus for the manufacture of thin film or sheet.

### Background of the Invention

The design of extruders for manufacture of thin film or sheet has imposed special problems due to the rigorous requirement for high quality of the melt that is to flow through the narrow gap die orifice.

The requirement of highly uniform melt is particularly important in blown processing where the film or sheet is drawn from the narrow gap of an annular orifice and axially and transversely stretched by the action of a captured air bubble and take away rollers. Any nonuniformity in temperature in the melt (with associated nonuniformity in viscosity and melt strength) causes nonuniformity in the drawing and stretching action and in the resultant product.

Furthermore, in order to meet the demand for high throughput at low capital cost, the uniformly melted resin should be delivered to the die apparatus at high pressure (e.g. at 6,500 psi or approximately 450 atmospheres), with relative immunity of the flow rate to change in back pressure.

In typical extruder designs, in which the resin is melted and pressurized by a single turning shaft, as throughput is increased, there is a tendency for the resin to be less evenly heated and to have greater nonuniformity in viscosity, melt strength and stretch properties. The resultant sheet or film can be unusable for its intended purpose. Also, with increased throughput, the flow rate has tended to vary detrimentally when back pressure variations occur, as

0069271

- 2 -

when the narrow film die gap is adjusted or the die is changed to produce a different diameter bubble. Furthermore, the flow rate has been adversely affected by build-up of material on screen devices used to screen the melt as it proceeds to the die orifice.

For such reasons, attempts to increase throughput of single shaft extruders for film or sheet production have so degraded performance that industry has used oversized equiment and has increasingly turned to more costly and complex systems such as the twin shaft extruder and the use of melt pumps.

The present invention is directed to meeting the demands for increased throughput of high quality resin for film or sheet dies with a single shaft extruder design.

It is also directed to providing an extruder design that enables processing of resins of different types and viscosities in the same extruder.

## Features of Prior Single Shaft Extruders for Film Forming Dies

In single shaft extruders, typically the plastic resin is conveyed by a screw thread over a long distance. The interaction of the rotating shearing screw thread and the heated barrel progressively melts solid phase resin. The earlier-melted and later-melted resin elements have different temperatures because of different shear histories. This results in lack of homogeneity of the melt at the end of the screw thread.

To seek to improve the action, specialized devices have been employed at various points along the extruder, such as shown in U.S. patents 2,838,794; 3,486,194; 3,487,503; 3,701,512; 3,941,535; 4,199,263 and 4,201,481. Typically, these are only partly successful, especially at high flow rates.

To ensure that only the melted resin reaches the die, a barrier also is often included, to precede the final mixing section. The barrier provides a narrow gap through which the melted resin can flow while the solids are restrained. The barrier may take different forms. In a double threaded arrangement (for example, see Swiss Patent No. 420,581 and U.K. patent No. 964,428), the single extruder shaft has a pair of side-by-side channels formed by a pair of generally parallel helical threads. The solids channel is open to receive the solid feed from upstream, but is closed at its downstream end. The melt channel is closed at the feed end but open downstream. The clearance between the barrel and the screw thread at the trailing side of the solids channel during rotation of the shaft provides the path by which melted resin escapes from the solids channel and enters the melt channel. Similar constructions are shown in U.S. patents 3,271,819; 3,368,724; 3,445,890; 3,858,856; 3,867,079; 4,154,535; and others. A somewhat similar design but using a double pattern of axially extending flutes rather than a double helical thread is shown in U.S. 3,486,192.

To achieve the needed final high level of pressure at the film-forming die in single or double thread arrangements on the single shaft, the threads of the melting section of prior designs are typically constructed to have a net forwarding effect all along their length, i.e., the threads produce a substantial positive pressure gradient over the entire length of the melting section. This net forwarding effect of the melting section is also designed to produce added pressure to make up for pressure loss that may be produced by downstream devices such as barrier sections of the fluted type or mixing devices.

Film and sheet forming extruders based upon these features have had the deficiencies that have previously been noted.

- 4 -

## Summary of the Invention

The invention therefore relates to an extruder capable of melting and extruding polymeric resin through a narrow gap orifice to form film or sheet, the die apparatus having a characteristic high pressure feed requirement, the extruder comprising a single hollow barrel with a single rotatably driven shaft extending therethrough, the barrel having an inlet port for admitting solid resin particles at one end and at the other end an outlet port for discharging molten resin under high pressure to feed the die apparatus, the driven shaft having means in respective melting and mixing sections to shear and mix the resin.

According to one aspect of the invention, the extruder has a defined initial pressurization stage which is confined to the region in which the resin particles remain solid and which is adapted to produce, at the end of an essentially solid mass, an initial pressure substantially in the range of the high pressure feed requirement of the die apparatus, and downstream of this initial pressurization stage, the melting and mixing sections of the extruder are constructed to communicate the initial pressure to the end of the mixing section without substantial intervening pressure gradients.

The melting section has a barrier configuration comprised of side-by-side wide helical solids and melt passages, with an intervening helical barrier over which only melted resin can pass. The width of the solids passage in the barrier configuration corresponds to the width of the solids passage in the preceding pressurization stage to enable effective downstream transmission of the pressure through a relatively undisturbed, compact solid mass.

The numerous desirable effects on melt quality and performance are related to maintenance of essentially plug flow conditions in the solids passage and drag flow conditions in the downstream direction in the melt, with attendant decrease in shear variation through the melt. A wide melt channel enables drag flow to be approached while providing a melt flow profile that enables the extruder to overcome high back pressure while mantaining high output rate.

According to preferred embodiments of the extruder: the extruder has an end of screw delivery pressure P and the initial pressurization stage is adapted at the end of the essentially solid plug to produce pressure within about 20 per cent of the value of the delivery pressure P; the downstream melting and mixing sections are constructed to maintain the pressure of the melted resin substantially within the pressure envelope defined by upper and lower limit lines projected from the pressure values of 1.2 P and 0.8 P at the end of the initial pressurization stage to the value P at the delivery end of the screw; at least a major portion of the extruder downstream of the initial pressurization stage has a neutral or negative pressure profile effective to avoid back flow tendencies in the melted resin; and following the melting section, a mixing section is provided having an essentially neutral pressure profile and adapted to subject the resin essentially to apparent drag flow conditions in the downstream direction, to contribute to the uniformity of the melted resin. This mixing section has important novelty by itself as well because it can improve the performance of other extruder designs by providing a highly homogenous melt wherever needed.

Also, in preferred embodiments, the initial pressurization stage is defined by a helical flight extending about the axis of the driven shaft and grooves in the barrel, the flight and the grooves constructed to act cooperatively, the grooves adapted to oppose circumferential movement of the solids mass with the shaft, and the helical flight adapted to compressively advance the solids particles into a solid mass that moves toward the outlet whereby increase in pressure can rapidly be achieved in the solids mass. Preferably the grooves in the barrel are helical in the direction opposite to that of the helical flight on the shaft to apply a deflecting force in the axial direction and preferably their pitch decreases in the downstream direction to accommodate increase in density of the compressing solid particles. (Such a construction of a feed section has previously been proposed in other extruder contexts, for purposes of increased throughput and lower power consumption, see e.g., DT AS 22 05 426). In conjunction with such an initial pressurization stage, devices on the shaft in the following sections of the extruder are constructed to enable the pressure to be maintained substantially at the pressure produced initially by the interaction of the helical flight with the grooves in the barrel. Thus, in the melting or barrier section (which in prior designs typically applies strong forwarding effect with increase of pressure) the helical screw is specially constructed to drag the melt forward, to create drag flow conditions in the downstream direction, in which there is no increase of pressure. In the mixing section (which in prior designs typically causes pressure loss) the mixing devices are specially constructed to apply a forwarding effect substantially of the value of the respective pressure losses so that an "apparent" drag flow condition in the downstream direction exists in which there is no substantial change in pressure. Also, in the case of a barrier having effectively an extended length in the axial direction of the extruder, the melt passage beyond the barrier is deepened so that drag flow in the downstream direction is established in the melt passage which minimizes shear in the molten material after it is separated from the solids.

According to another aspect of the invention a novel mixing section for the above described extruder or other designs is constructed to impart forward thrust to resin of value of the order of forward flow resistance encountered by the resin as it flows through the mixing section, whereby the flow resistance is at least substantially counterbalanced and differential shear produced by flow in response to pressure drop across the mixing section is thereby avoided. In preferred embodiments the mixing section is comprised of an array of discrete, spaced apart projections extending laterally from a rotatably driven shaft, the projections adapted to pass individually through and mix the melted resin as the resin proceeds toward the outlet, the projections constructed and arranged to cooperate with each other to impart axial thrust to the resin toward the outlet; the spaced apart projections are arranged in a helical pattern about the shaft, the pattern extending in the direction of the helical thread of the extruder; and the spaced apart projections comprise generally cylindrical pins extending generally radially from a surface of the shaft. In the presently most preferred form, the mixing section comprises a barrel, a rotatably driven shaft within the barrel and an array of mixing pins protruding laterally from the shaft and immersed in the molten plastic being fed under pressure through the barrel, the improved mixing being achieved by arrangement of the mixing pins in a helical pattern in a direction corresponding to the forwarding direction for a hypothetical thread on the driven shaft, the pins being so shaped and spaced apart to provide in the aggregate, forward thrust of value of the order of forward flow resistance encountered by the resin as it flows through the mixing section whereby the flow resistance is at least substantially counterbalanced and differential shear produced by flow in response to pressure drop across the mixing section is thereby avoided. Preferably, the pins are substantially cylindrical and the shaft in this section is substantially smooth, preferably being a smooth cylinder, from which the pins protrude radially, with no additional elements affecting the flow of resin in this section. Preferably the pins lie in rows at an angle of between about 13 and 14° of the axis and the spacing between rows is about 0.4 in. (10.2 mm).

## Preferred Embodiment

The structure and operation of a preferred embodiment of the invention will now be described after first briefly describing the drawings.

## Drawings

Fig. 1 is a side view partially in section of a blown film extruder of the invention;

Fig. 2 is a graph showing the optimum pressure profile over the length of an extruder according to the invention, and a preferred envelope of allowable variation;

Fig. 3 is an isometric view partially in section of the extruder barrel at the solids feed section, while Fig. 3a is a view in section of the barrel and feed port at the line 3a-3a of Fig. 3;

Fig. 4 is a diagrammatic side view partially in section of the double threaded melting and barrier section, while Fig. 4a is a graph of the pressure profile of the embodiment shown in Fig. 4 ;

Fig. 4b is a development of the helical channels of Fig. 4 while Fig. 4c is a diagrammatic representation of the depth profile of the mid line of channels of Fig. 4;

Figs. 5 and 5a are double platen velocity diagrams of the solid and melt channels of Fig. 4, in the plane parallel to the flight, with respective plug and drag flow conditions;

Fig. 6 is a side view of the neutral pressure pin mixing section, while Fig. 6a is a section view at the line 6a-6a of Fig. 6 and Fig. 6b is a diagrammatic development view taken at the line 6b-6b of Fig. 6a;

Fig. 7 is a generalized diagram of the advance of molten plastic at neutral pressure gradient according to the invention, with plots of velocity and shear stress, while Fig. 7a is a plot of pressure over length; and

Figs. 8 and 9 are generalized diagrams similar in type to Fig. 7 of the advance of molten plastic at negative and positive pressure gradients, respectively, that are substantially avoided according to the invention, while Figs. 8a and 9a are respective plots of pressure over length.

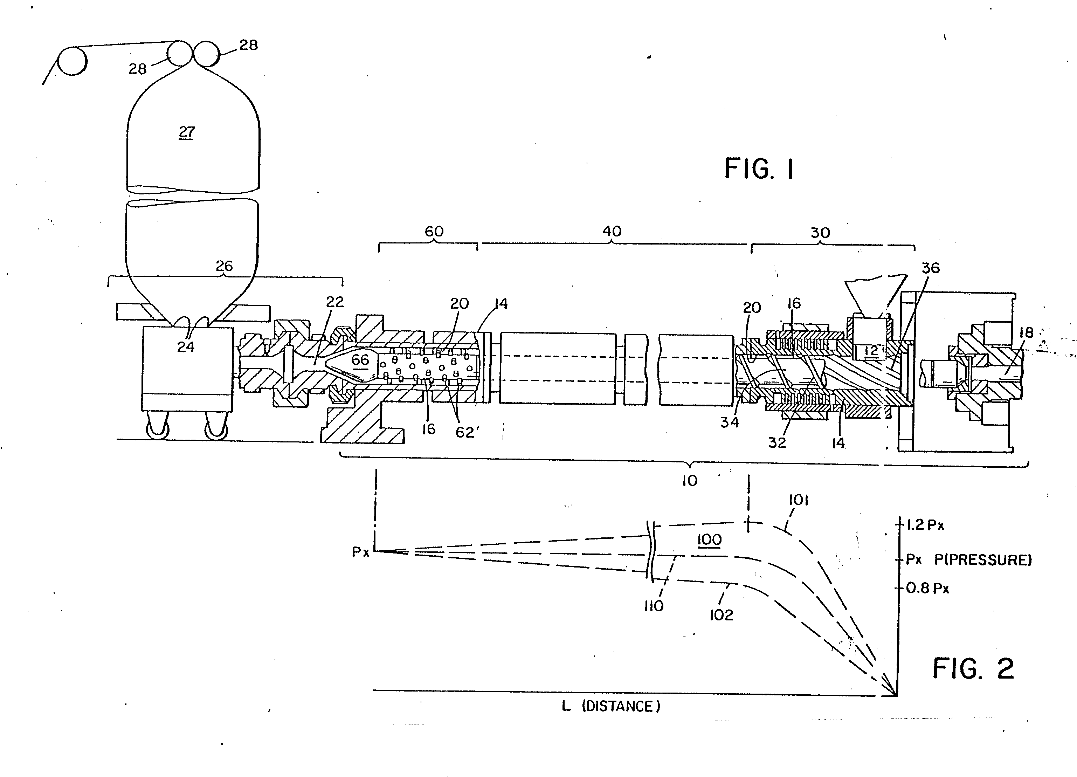

Referring to Fig. 1, there is shown an apparatus for producing blown film, such as for plastic bags. Solid particles of the desired resin, e.g. high density polyethylene (HDPE) resin, are introduced through feed port 12 into hollow extruder barrel 14. Extruder shaft 16, rotated by motor 18, extends from the motor to the outlet 22.

The extruder shaft 16 and the wall 20 of extruder barrel 14 act cooperatively over this length to convert the solid particles of resin introduced at port 12 into molten fluid at outlet 22 where it is discharged under pressure to flow through narrow annular film-forming die gap 24 in die apparatus 26. The molten plastic leaves die gap 24 vertically to form bubble 27. At the die it has a thickness of the order of .030 to .060 inch (0.76 to 1.52 mm) and is quickly drawn down even further, e.g. to one or a few mils thickness, by a combination of transverse expansion (i.e. "blow up") in response to the internal air pressure of bubble 27 and the tension applied due to difference in speed between take-up rollers 28 and the extrusion rate at die gap 24. Any variation in temperature or viscosity as the melt leaves the die is accentuated during this "drawdown" process and must be avoided by delivery of highly uniform melt to the die.

The working length of the extruder 10 of Fig. 1 defines solids feed and pressurization section 30, melting section 40 and mixing section 60.

In solid feed and pressurization section 30 (Figs. 1, 3 and 4) in the proximity of feed port 12, shaft 16 has a radially extending helical flight 32 which forms a shallow helical passage 34, between the root surface of the shaft 16 and the barrel wall 20. Typically passage 34 is 0.197 to 0.276 inch (5 to 7 mm) deep for a 60mm extruder for a typical resin and the lead of the flight is equal to 1 bore diameter (1D). In section 30, the surface of barrel wall 20 over a distance of about 3 bore diameters is broken by grooves 36 (Figs. 3 and 3a). Typically five grooves are spaced at 72° intervals. Each groove 36 is triangular in cross-section, as shown in Fig. 3a. This shape provides a large wetted area for a given groove size. The grooves taper from a maximum depth, typically 0.140 inch (3.6 mm), at the upstream end to zero at the downstream end over the 3D distance. This taper provides self-flushing. The grooves 36 are cut into the wall 20 of extruder barrel 14 in a left hand, helical pattern in the opposite direction to that of the flight 32 on shaft 16, and at a smaller lead, or pitch. Typically the lead of the grooves is 22.835 inches (580 mm) while the flight 32, has a lead of 2.362 inches (60 mm). The shorter face 37 of groove 36 in wall 20, being at the greater angle to the wall 20, faces opposite to the direction of conveyance to oppose the rotational component of the motion of material generated by the sloped screw thread (direction of conveyance is at a substantial angle to the forward facing surface of the screw flight).

For use especially in instances where the mass of solid particles being fed to the extruder is highly compressible, the lead of the grooves in the barrel decreases in the forward direction to match their opposing angle to the progressive change of the angle of conveyance of the resin mass.

In the embodiment just described, the lead angle of grooves 36 measured from the axis is 17.5 degrees (as determined by the lead of 580 mm). However, much shorter leads and steeper angles can be employed. Thus, in an embodiment having an angle that increases with increased density of the mass of particles, the angle of the grooves in the barrel may begin at about 50 degrees and, over the 3D length, increase to about 75 degrees, as measured from the axis.

Downstream of section 30 is melting section 40 in which the resin is melted as a result of both the heat supplied through the wall of the barrel and the shear-heating effect of the rotating screw and any remaining solid particles are separated from the molten fluid by the barrier which allows only molten fluid to continue downstream.

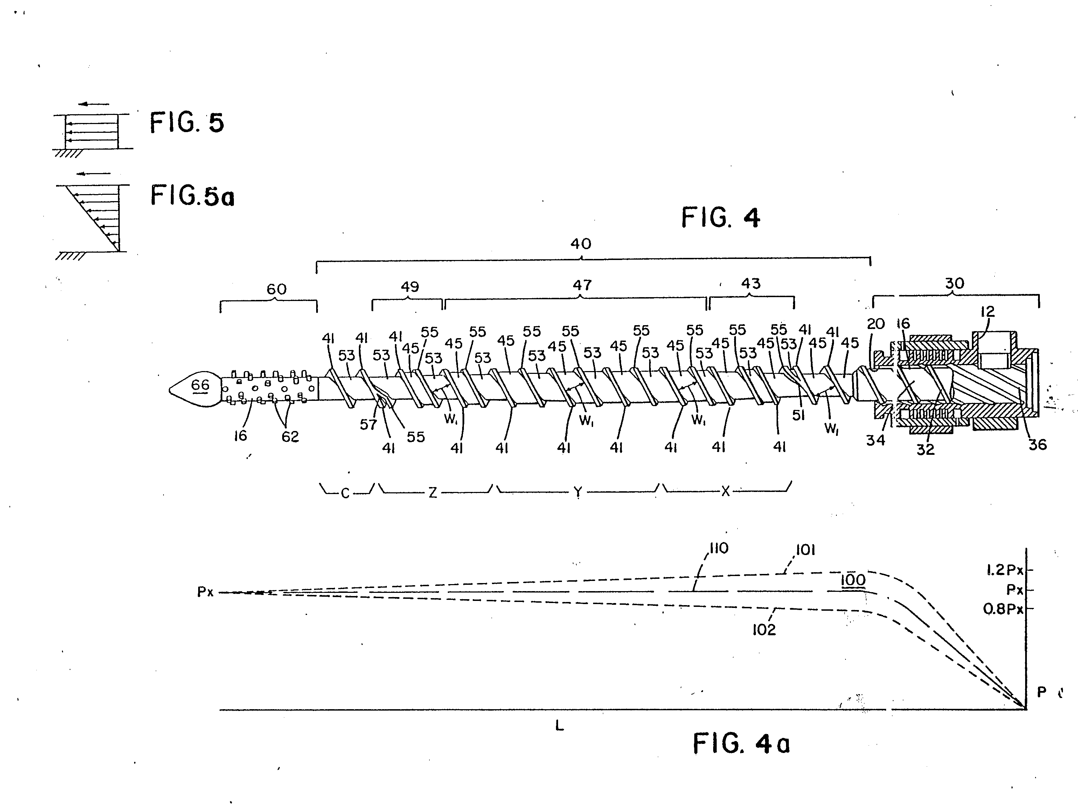

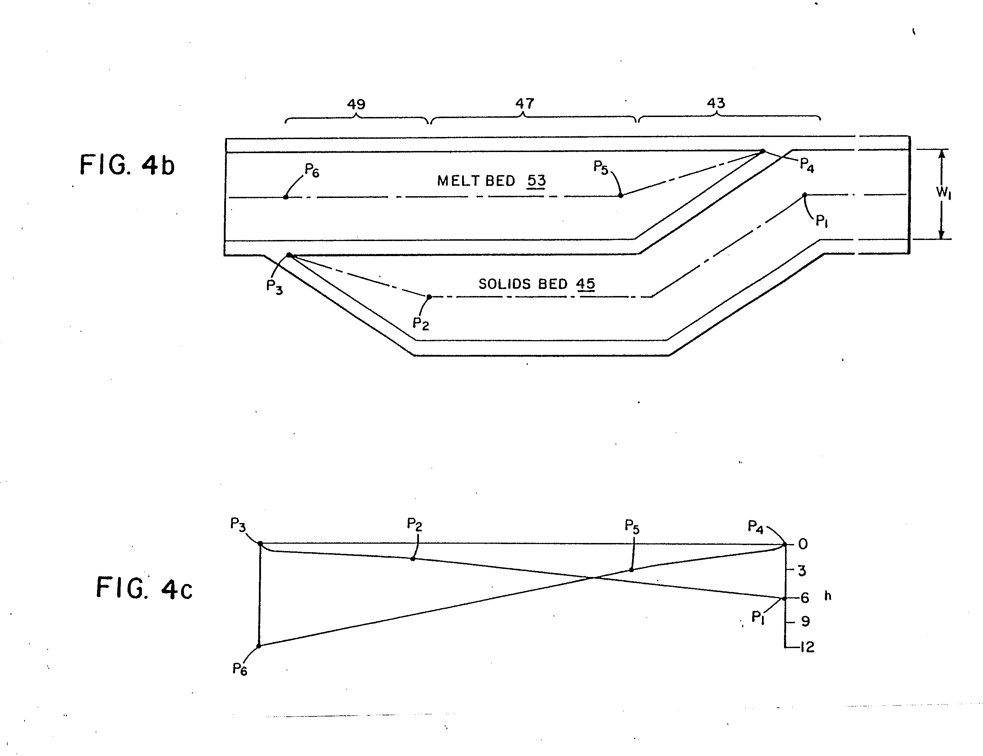

As shown in Fig. 4, the melting secton 40 and barrier are combined over a length of shaft 16 by means of a helically, double flighted screw. The first passage 45 formed between the initial passes of flight 41 is open at the upstream, i.e. solids feed, end and closed at the downstream end. The second passage 53, formed as the second flight 55 branches from the first flight at 51, in close proximity to the initial pressurization stage 30, is closed at the upstream end and open at the downstream end.

In the region where the passages 45 and 53 exist side by side, the second passage 53, open only to material passing over barrier flight 55, increases in cross sectional volume while the first passage 45, open to solids feed, decreases in volume.

Starting at the right hand side of Figs. 4 and 4b, the initial pressurization stage 30 is effective to compress the solid particles into a mass of a density substantially equal to the charcteristic density of the raw material. The initial lead of flight 41 after the initial pressurization section is equal to 1D (1 diameter of the barrel), establishing channel 45 with $W$. Beginning at point 51 where the second flight 55 begins, the lead of flight 41 progressively increases in zone 43 over an axial distance X to maintain the width of solids channel 45 at $W_1$, the same as before, and to increase the width of melt channel 53 from zero, at its origin, to width $W_1$. Over the mid-portion, zone 47, of the barrier section, for an axial length Y, the widths of both channels are constantly $W_1$. Then, conversely to the beginning, the lead decreases in zone 49 over an axial distance Z to maintain the width $W_1$ of melt channel 53 and to decrease the width of solid channel 45 from width $W_1$ to zero at its termination at 57. From there flight 41 extends distance C and discharges the melt to the pin mixing section.

The distances X, Y and Z strongly depend on the melting characteristics of the particular resin to be processed. For a certain HDPE type of material X and Z may be equal to 5 D (five bore diameters), while Y is equal to 2D, and C is equal to 1 1/2 D.

Referring to Fig. 4c, the depth profiles of the two channels are markedly different. For example, solids channel 45 may begin at the right at depth 0.236 inch (6 mm), point $P_1$, and decrease linearly to 0.059 inch (1.5) mm at point $P_2$ at the end of the mid-section of the barrier. From there the depth decreases more gradually until the end region where it goes to zero at point $P_3$. The shape of the depth profile for the melt channel 53 is similar, but the slope is adjusted in this case to achieve a final channel depth at $P_6$ of 0.472 inch (12 mm). Thus, after the beginning region the depth increases over the initial 3D length from point $P_4$ to the depth of 0.118 inch (3 mm) at point $P_5$, and then increases linearly over the mid and final sections to 0.472 inch (12 mm) at the end, point $P_6$.

Accordingly, it is seen that the melt passage is substantially deeper (here twice as deep) at any point along the passage (i.e. any flow cross-section) than is the solids passage at the point (or cross-section) which accommodates the same mass flow rate.

This initial embodiment is based on the principle of maintaining substantially plug flow in the solids channel, i.e. flow velocity is uniform across the full cross-section of the remaining solids, Fig. 5, corresponding to the solids flow velocity generated in the initial pressurization stage; the embodiment is also based upon the principle of achieving a density of the mass of solid particles equal to the characteristic density of the resin at the end of the initial pressurization stage; and this embodiment is also based on maintaining substantially drag flow in the downstream direction of the melt channel, i.e. flow velocity increases linearly (in the two platen model) across the depth of the channel from stationary to moving surface, Fig. 5a.

Some variations in this relationship can be provided by the designer to compensate for any inabilities to fully reach the desired mass density or to achieve theoretically pure plug flow in the solids channel or drag flow in the melt channel, and to compensate for changes in the characteristic density of the resin as it is heated.

At the downstream end of the extruder of each embodiment is neutral mixing section 60, (Fig. 6). It comprises an array of cylindrical pins 62 extending radially, typically between 0.40 and 0.45 inch (10.2 to 11.4 mm), from the smooth cylindrical surface of shaft 16 in a helical pattern with no other devices present to affect the flow. The pattern of pins extends in the same helical direction as the upstream flights (i.e. 32, 41, 55, Fig. 4.) For the 60mm extruder, the pins 62, typically 0.25 to 0.375 inch (6.4 to 9.5 mm) in diameter, are arranged in two parallel flights 63, 64 with axial distance (a) between rows of 0.80 to 0.90 inch (20.3 to 22.9 mm) and lead (b) of 1.772 inches (45.0mm), and a pitch of approximately 13 to 14° with a constant distance (dp, Fig. 6b) typically 45° (8 pins per circumference), with about 0.4 inch (10.2 mm) spacing between pins in a row.

Operation

Pressure Profile

Referring to Fig. 2, the pressure requirement for the end of the extruder mixing section is represented by Px, e.g., 6,500 psi (approximately 450 atmospheres) for a typical resin. A pressure substantially within this range is developed within the solids feed and initial pressurization section 30 by the coaction of flight 32 on shaft 16 and grooves 36 in the wall 20 of extruder barrel 14. The barrel grooves resist rotation of the solid mass and cause the solids essentially to slide along the grooves 36. This avoids shearing of the solids, and therefore delays the melting of the solids particles. As the solids proceed in this fashion, they compress to form a compressed plug of solids, in which pressure develops very rapidly and density of the mass of particles approaches the characteristic density of the resin.

As specifically shown in Fig. 2, the pressure developed in the solids feed section 30 is preferably within the range of 0.8 Px to 1.2 Px, (the pressures here represented are the mean pressures achieved over a full turn of the revolution of the screw). In each subsequent stage of the extruder conversion process, i.e. in the melting section 40, and neutral mixing section 60, the pressure in the extruder barrel 14 preferably remains within or close to the bounds of the pressure envelope 100 formed by the maximum and minimum pressure limit lines 101 and 102 which lie on either side of ideal 110. These lines extend from the 1.2 Px and 0.8 Px pressure points at the end of the solids feed section 36 to the value Px at the extruder outlet 22.

The pressure is maintained within envelope 100 by the construction of each section to provide an essentially neutral pressure gradient, i.e. to produce drag flow in the downstream direction or, in the case of the mixing section, apparent drag flow in which the forwarding effect provided by the design of the devices on the shaft overcomes pressure losses in the mixing section. By this arrangement, pressure is constant along the length of travel. The advantage of drag flow in the downstream direction is that the shear, and hence the shear-heating effect, is substantially constant throughout the radial depth of the resin channel when considering the downstream direction. To illustrate, referring to the two platen diagram of Fig. 7, element 20 represents the stationary barrel surface and element 16 represents the moving shaft. The pressure profile 130 of the resin (Fig. 7a) is constant over length of interest (L). Velocity profile V, Fig. 7, shows the cross-sectional velocity of molten material between moving shaft 16 and stationary wall 20. The velocity at the moving shaft is the velocity of the shaft and the velocity of the molten material at the stationary wall is the velocity of the wall, i.e. zero. The plot of the velocity of the molten material at every point therebetween approximates a straight line. Since there is a neutral pressure gradient, there is no pressure drop influence. With such a drag flow in the downstream direction, the shear, T, Fig. 7, within the molten mass which generates heat, is more uniform throughout the depth of the mass. The shear heating of the material is therefore substantially more uniform and the corresponding portion of the extruder applies a substantially uniform effect upon the material. The same factors still provide improvement in uniformity even though the movement of shaft 16 is rotational, and some transverse flow occurs. The transverse flow is indeed desirable as it produces mixing which limits the residence time in the extruder of any element of the resin--even if the element at some point lies at the barrel surface. (The effects of nonuniformity of stress due to such transverse flow are counteracted in the subsequent pin mixing stage.).

To contrast the foregoing desirable effect, one may consider prior art extruder sections which have negative or positive pressure gradients, so that the flow has a substantial pressure flow component. Where the pressure gradient is negative (132, Fig. 8a), i.e. there is a pressure drop over length (L), the velocity profile ($V^-$, Fig. 8a) is curved because the material in the center of the passage moves ahead more rapidly than in the drag flow case, Fig. 7. The shear distribution ($T^-$, Fig. 8) is therefore not uniform across the depth of the passage, and causes variations in temperature and viscosity across the depth. In the case of positive pressure gradient, the effects are similar. With the positive pressure gradient 134, Fig. 9a, i.e. P increases along L, back flow can develop along stationary wall 20 as fluid material works backward toward the area of lower pressure upstream. A curved pressure profile ($V^+$, Fig. 9a) and a corresponding slanted shear profile ($T^+$, Fig. 9a) develop, again signifying detrimental variation in shear-related temperature and viscosity.

According to the invention, it is proposed to avoid pressure drop in the melt wherever possible in order to make the shear heating effects most uniform.

It is realized that the final mixing section in a sense is most critical because, beyond that stage, there is no opportunity to make the melt more uniform by further mixing.

Mixing of course implies the intentional introduction of velocity differences to localized portions of the melt, hence there can be no true drag flow, which might be thought to make the theory of the invention inapplicable. According to the invention, however, it is desirable to achieve an "apparent" drag flow condition by avoiding pressure drop across the mixing section. This avoids radical nonuniformities of shear due to pressure flow. Then, by suitable selection of the mixing design, all elements of the flow can be subjected to approximately the same mixing movement so that the heat of mixing can be uniformly spread according to mixing statistics.

Referring to the pressure profiles of Figs. 2 and 4a, the desirability to confine pressure variation to a small value in the mixing region is denoted by the narrowness of the preferred pressure profile envelope in the region of the mixing section.

Because a certain degree of inhomogeneity can be accommodated by the downstream mixing capability, the permitted pressure profile envelope is wider in the region of the barrier, Fig. 4, and still wider in the upstream melting section.

With these relaxed constraints the principle of the invention can be used to advantage in the melting and barrier section, despite the downstream mixing capability, and also despite inhomogeneity of heating due, e.g., to heat transfer from heaters surrounding the barrel. Besides a certain degree of advantage of drag flow, numerous other advantages still remain to operation within the proposed pressure profile.

For instance, whenever the resin has already reached a suitable molten condition, added shear, whether uniform or not, can be detrimental, from the point of view of unncessary waste of mechanical energy or of overheating the resin. By the initial upstream pressurization, the need for strong pumping of the melt in the melting and barrier section is alleviated and relatively deep, low-shear flow channels can be employed to lead the melt away from the barrier.

A further advantage is realized in the melting section, up to the barrier wall, having to do with backflow. By avoiding the usual strong positive pressure gradient in this region, back flow tendencies can be minimized or completely avoided. This has more importance than is commonly recognized. Back flow not only introduces further opportunities for inhomogenous heating, but also, typically, resin elements in the molten phase are more responsive to back flow pressure conditions than are resin elements in the solid phase. Thus, in conventional extruders with positive pressure gradient in this region, there is a tendency for the solids to move ahead of the molten phase, and to clog the passage over the barrier. This tendency is also avoided according to the invention, hence the barrier in certain cases need not be so long as in previous designs.

The wide melt channel along the major length of the barrier, combined with the wide, side-by-side solids channel, provides a number of advantageous characteristics. The properly selected melt channel depth can enable drag flow to be approached, thus reducing unwanted shear effects in the already-melted resin; at the same time the wide, shallow melt channel profile enables the extruder to maintain a large output despite changes in back pressure caused by the downstream die apparatus.

Also, such channel construction enables full advantage to be taken of the high conveying pressure transmitted through the wide solid plug. Since it is unnecessary to produce a large conveying effect in the melted resin, much of the length of the extruder can be taken up by the wide, side-by-side solids and melt channels of the barrier region and it is unnecessary to have a long conveying-force-applying "metering" section.

Also, for reasons already understood, the wide channels produce a screw geometry having a large lead angle that provides a relatively short wiping distance across the solid bed. This can enable the depth of the melted material between between the barrel surface and the solid bed to be kept quite thin, can improve heat transfer to the solid resin from the barrel, and can provide a higher shear rate in the thin layer to introduce more heat into the melting resin.

The foregoing channel arrangement can also assure ready flow of the melted material even from the farthest points upstream of the melt channel, i.e. one can avoid pressure build-up in downstream portions of the melt channel that would impede melt flow from its upstream portions and cause stagnation. Thus the full length of the melting section can be effective, and a uniform quality melt can be obtained.

Extruders of 60 millimeters diameter and 24D length already tested following the above principles have demonstrated production rates in the range of 1.2 to 1.4 kgs./hr/rpm and higher with back pressure as high as 4000 to 5000 psi (1350 to 1700 kg/cm$^2$) with such various resins as ABS, PA, PC, PS, LDPE, LLDPE, and HDPE. (In the case especially of low density materials the root diameter of the screw is maintained constant from the initial pressurization stage (30) to the barrier region (43), rather than as shown in Fig. 4.)

Operation

### Description of the Process

Referring to Fig. 1, solid particles of polymeric material are introduced into feed port 12. Extruder flight 32 on shaft 16, rotated counter clockwise in solids feed and initial pressurization section 30 by motor 18, pushes the particles toward outlet 22 and compacts the particles. The normal tendency of a compacted mass of particles is to rotate with flight 32, with resultant particle-to-wall frictional shear that would soon induce melting. Helical grooves 36 (Fig. 3), turned opposite to the direction of shaft flight 32, and at a much greater lead, retard this rotation and cause the particles to move en masse along the screw, i.e. like a threaded nut. The configuration of grooves 36, i.e. triangular with a broad base and steep opposing face 37, prevents shearing of the ribs of the solid mass that extend into grooves 36 and through which antirotation forces are transmitted. As the solids plug moves down barrel 14, grooves 36 become shallower until ending, typically after three diameters, to allow shear forces to act on the solids mass to begin conversion to the molten state. By thus delaying the melting process while the solids plug is moved down cylinder 14, great pressure is developed in the solids plug and in the melting material being pushed ahead of it. It is readily possible to produce the desired pressure, between 80% and 120% of Px, the pressure required at the outlet and to achieve a density of the particle mass substantially equal to the characteristic density of the resin.

At this point substantially a plug flow condition exists due to the compacted nature of the particles and the higher friction between the particles than between the barrel or screw surfaces and the particles.

From solids feed and initial pressurization section 30, the resin moves in plug flow into melting section 40. The rotary motion of the screw flight 42 in cooperation with the stationary barrel wall 20 produces shear between the particles and between the particles and the barrel surface, to heat the particles and cause melting, especially at the barrel surface.

Axial thrust to move this mixture of molten and solid plastic against the back pressure of the die apparatus 26 is provided by pressure generated by the solids plug in section 30. The pressure gradient throughout the melting section is essentially neutral (Figs. 2, 4a ), the design of the rotating screw thread providing essentially only enough forwarding to overcome the flow losses, due e.g. to shear friction.

In Fig. 4, the melt section 40 and barrier are combined, being formed by a double flighted screw 41, 55. The first flight 41 forms passage 45 open at the upstream end to receive the solids particles leaving feed section 30. This flight 41 extends radially close to barrel wall 20, hence leakage is very limited. The second flight 55 branches from first flight 41 close to the upstream end to form the melt channel. This second flight 55 has a lesser radial extent than first flight 41, to provide a gap between the radial face of flight 55 and the wall 20 of barrel 14. Molten resin formed by shear of the solid bed at the barrel surface flows through this barrier gap into second passage 53 while solids are restrained and remain in passage 45. Second passage 53, bearing the molten fluid, is deeper than the solids passage for a similar mass flow (Fig. 4c), the construction of solids passage 45 being adapted for maximizing the shear surface (area of opposing stationary and rotating surfaces) to encourage melting, while melt passage 53 is adapted to offer a minimum of shear to maintain the temperature of the fluid essentially at the temperature it had as it came over barrier flight 55. The difference in flow velocities is seen by comparison of Fig. 5, plug flow in solids channel 45 and Fig. 5a, drag flow in melt channel 53. By this construction, the heat (i.e. shear) history of material reaching the melting temperature and passing over barrier flight 55 at an upstream point and moving downstream in melt passage 53 is substantially uniform with that of material moved downstream in solids passage 45 (as a solids particle) before reaching the required melting temperature and passing over barrier flight 55 at a point relatively downstream. (Any potential for differences in heat history are further counteracted by neutral mixing section 60.) While restricting flow of solids particles, the gap over barrier flight 55 allows the pressure generated by the solids plug in solids feed section 30 and transmitted through the polymeric material in passage 45 to be transmitted through the melt layer over the barrier and into the molten material carried in passage 53. The axial face of flight 55 (i.e., the face defining one side of the gap) is broader than the axial face of flight 41, to provide drag flow to avoid pressure loss in this region. The pressure profile (Fig. 4a) remains essentially neutral through the combined melt and barrier section and the flights 41, 55 on shaft 16 provide only enough forwarding to the polymeric material to provide drag flow.

The now-molten fluid passes directly from the melting screw (Fig. 1) into neutral mixing section 60.

Successive radial pins 62 (Fig. 6) arranged in a helical pattern on the surface of shaft 16, moving through the molten mass, cooperate in the manner of a screw flight to impart slight forwarding, shown by arrow A in Fig. 6b. But the gaps between successive pins 62 in a row allow a portion of the molten material also to slip backward into the following passage, arrow B in Fig. 6b. By this movement of pins 62, the molten material is mixed to disperse any regions of nonuniformity to provide uniform material to outlet 22, while the array of pins provides sufficient forwarding to overcome frictional forces retarding flow. Again, the flow pressure is transmitted through the mixing section as generated from the solids plug in solids feed section 30 with the pressure gradient essentially neutral within the narrow confines of the preferred pressure envelope (100, Figs. 2 and 4a).

The mixed material, now having uniform temperature and viscosity, advances beyond head 66 of the shaft 16 to die apparatus 26 and on through annular orifice 24.

Not only does the extruder of the invention provide highly uniform melt at high flow rate for the particular resin for which it is designed. It also can perform well with other resins having other charcteristic viscosities. This is because drag flow conditions achieved according to the invention are essentially independent of viscosity and enable uniform shear distribution to be developed.

Other Embodiments

Other embodimens are within the following claims. For example, the feature of the invention of plug flow of the solids combined with drag flow of the melt can be used with other extruder designs. On the other hand the novel final neutral mixing section can be used to advantage in designs which do not have neutral pressure profile throughout the preceding section.

For example, in a foam system, after melting the resin it is desirable to introduce a blowing agent having a much different viscosity than the resin. Uniform mixing of the resin and agent is made possible by use of a pin mixing section according to the invention preceding the point of introduction of the blowing agent. Because the novel mixing section can give the molten resin a highly uniform viscosity at the point of introduction, highly uniform blending of the blowing agent in the resin becomes possible.

Similarly, the mixing section can precede the venting section of a vented extruder for the similar purpose of assuring uniformity at the venting section.

The features of this invention may of course be employed in extruders over a range of sizes. For instance, to adapt the neutral pressure gradient pin mixing element to other size apparatus, the pin arrangement can be modified to accommodate changes in the surface area of the shaft 16 in the mixing section 60. The distance between pins (dp, Fig. 6b) is preferably held constant while the pin diameter is made smaller or larger, for smaller or larger barrels, respectively. In this case the angle of the lead along the surface of shaft 16 may be held constant between about 13° and 14°. The distance between rows ($d_r$, Fig. 6b) preferably is also held relatively constant so far as allowed by the requirement of having complete rows of pins.

What is claimed is:

1. In an extruder capable of melting and extruding polymeric resin through a narrow gap orifice of a die apparatus (26) for forming film or sheet,

said die apparatus having a characteristic high pressure feed requirement,

said extruder comprising a single hollow barrel (14) with a single rotatably driven shaft (16) extending therethrough,

said barrel having an inlet port (12) for admitting solid resin particles at one end and at the other end an outlet port (22) for discharging molten resin under high pressure to feed said die apparatus,

said driven shaft having means in respective melting and mixing sections to shear and mix said resin,

c h a r a c t e r i z e d  in that

said extruder has a defined initial pressurization stage (30) confined to the region in which said resin particles remain solid, said initial pressurization stage adapted to produce at the end of an essentially solid mass an initial pressure (between 101 and 102, Figs. 2, 4a) substantially in the range of said high pressure feed requirement $P_x$ of said die apparatus (26),

and downstream of said pressurization stage, melting and mixing sections (40 and 60, respectively) of said extruder are constructed to communicate said pressure to the end of said mixing section (60) without substantial intervening pressure gradients,

said melting section having a barrier configuration (43, 47, 49) comprised of side-by-side helical solids and melt passages (45 and 53 respectively) separated by a helical barrier that interacts with said barrel to prevent solid resin particles to pass while permitting molten resin from passing over the barrier into said melt passage,

said solids passage (45) having a width $(W_1)$ corresponding to the width of the solids passage from the pressurization stage (30) to enable effective downstream transmission of said pressure through a relatively undisturbed compact column of solids,

said melting section having an essentially neutral pressure profile and adapted to subject melted resin essentially to drag flow conditions in the downstream direction to contribute to the uniformity of the melted resin.

2. The extruder of claim 1

c h a r a c t e r i z e d  in that

said barrier configuration is defined by a double thread on said shaft that defines said melt and solids passages, said melt passage (53) commencing at a point close to the end of said pressurization stage (30), said solids passage (45) having a depth sized to accommodate essentially plug flow of said resin from said pressurization stage, and said melt passage (53) having a depth sized to accommodate essentially drag flow of said resin in the downstream direction.

3. The extruder of claim 1 or 2

c h a r a c t e r i z e d  in that

after a short initial region, the melt passage (53) in the barrier region has a width which substantially corresponds to the width of the solids passage (45) and a depth which slopes more steeply than that of the solids passage.

4. The extruder of claim 2 or 3

c h a r a c t e r i z e d  in that

said melt passage (53) is approximately twice as deep at any point than is the solids passage (45) at a point that accommodates the same mass flow.

5. The extruder of any of the foregoing claims

c h a r a c t e r i z e d  in that

said initial pressurization stage (30) is defined by a helical flight (32) extending about the axis of said driven shaft (16) and grooves (36) formed in said barrel, said grooves adapted to resist circumferential movement of said solids mass with said shaft, and said helical flight adapted to compressively advance said solids particles into a solid mass that moves toward the outlet whereby increase in pressure can rapidly be achieved in the solid mass.

6. The extruder of claim 5

c h a r a c t e r i z e d  in that

said grooves in said barrel are helical in the direction opposite to the direction of said helical flight on said shaft.

7. The extruder of claim 6

c h a r a c t e r i z e d  in that

said grooves in said barrel have decreasing pitch in the downstream direction to accommodate increase in density of said solids particles as they advance through said pressurization stage.

8. The extruder of any of the foregoing claims c h a r a c t e r i z e d in that said extruder includes, following said melting section, a mixing section (60) having an essentially neutral pressure profile and adapted to subject said resin essentially to apparent drag flow conditions, to contribute to the uniformity of the melted resin.

9. The extruder of any of the foregoing claims c h a r a c t e r i z e d in that said extruder includes a mixing section (60) constructed to impart forward thrust to said resin of value of the order of forward flow resistance encountered by said resin as it flows through said mixing section whereby said flow resistance is at least substantially counterbalanced and differential shear produced by flow in response to pressure drop across said mixing section is thereby avoided.

10. The extruder of claim 9 c h a r a c t e r i z e d in that said mixing section (60) is comprised of an array of discrete, spaced apart projections (62, Fig. 6) extending laterally from said rotatably driven shaft (16), said projections adapted to pass individually through and mix the melted resin as the resin proceeds toward said outlet, said projections constructed and arranged to cooperate with each other to impart axial thrust to said resin toward said outlet of a value of the order of said flow resistance.

11. A pin mixing section for polymeric resin after it has been melted, comprising a barrel (14), a rotatably driven shaft (16) within the barrel, and an array of mixing pins (62, Fig. 6) protruding laterally from said shaft and immersed in the molten plastic being fed under pressure through the barrel,

characterized in that

said mixing section is useful with the extruder of any of the foregoing claims,

said shaft (16) in the vicinity of said pins (62) being free of any thread or other isolating formation whereby the entire array of pins about the circumference of the shaft can move through the melted resin,

said mixing pins being arranged in a helical pattern (Figs. 6, 6b) about said shaft in a direction corresponding to the forwarding direction for a hypothetical thread on said driven shaft,

the pins being so shaped and spaced apart to provide in the aggregate, forward thrust of value of the order of forward flow resistance encountered by said resin as it flows through said mixing section,

whereby said flow resistance is at least substantially counterbalanced and differential shear produced by flow in response to pressure drop across said mixing section is thereby avoided.

12. The mixing section of claim 11 characterized in that

the angle from the shaft axis of a row of said mixing pins arranged on the surface of said shaft is between 13° and 14°.

13. The mixing section of claim 11 or 12 c h a r a c t e r i z e d in that the distance between the surfaces of pins in a row is about 0.4 inch (10.2 mm).

14. The mixing section of claim 11, 12 or 13 c h a r a c t e r i z e d in that said pins are substantially cylindrical.

15. The mixing section of any of the claims 11, 12, 13 or 14 c h a r a c t e r i z e d in that said mixing section comprises a smooth root cylinder from which said pins protrude, there being no additional elements affecting the flow of said resin on said root cylinder.

16. The method of extruding resin characterized by the use of the apparatus according to any of the foregoing claims.

FIG. 1

FIG. 2

2/5

0069271

FIG. 3

FIG. 3a

FIG. 6

FIG. 6a

FIG. 6b

FIG. 5

FIG. 5a

FIG. 4

FIG. 4a

FIG. 4b

FIG. 4c

**FIG. 7**

**FIG. 7a**

**FIG. 8**

**FIG. 8a**

**FIG. 9**

**FIG. 9a**